# EUROPÄISCHE PATENTANMELDUNG

(11) **EP 0 725 040 A1**
(43) Veröffentlichungstag der Anmeldung: **07.08.1996**
(21) Anmeldenummer: 94119576.0
(22) Anmeldetag: 10.12.1994
(51) Int. Cl.: C02F 1/40, B01D 17/022, E03F 5/16

(54) **Koaleszenzabscheider**

(71) Anmelder: PASSAVANT-WERKE AG, D-65322 Aarbergen 7 (DE)
(72) Erfinder: Baar, Norbert, D-65329 Hohenstein-Holzhausen (DE); Dambmann, Willi, D-66558 Gückingen (DE); Bach, Dieter, D-65379 Allendorf (DE); Hoppen, Rüdiger, D-90449 Nürnberg (DE); Weis, Ulrich, D-65368 Klingelbach (DE); Heinz, Hans-Willi, D-56379 Holzappel (DE); Zimmermann, Bernd, D-65623 Netzbach (DE)

(57) **Zusammenfassung**

Bei Koaleszenzabscheidern nach DIN 1999, Teil 4 bis 6, die mit dem unteren Klarwasserauslauf vorgeordneten hohlzylindrischen Koaleszenzeinsätzen ausgerüstet sind, kommt es im Betrieb zu Ablagerungen von Ölschlamm in den Poren des Koaleszenzeinsatzes. Um den dadurch verursachten Stau auf der Zulaufseite zu vermeiden, wird zur Zwischenreinigung des Koaleszenzeinsatzes im eingebauten Zustand eine Rückspüleinrichtung vorgeschlagen, die mittels radial nach außen gerichteter Düsen den Koaleszenzeinsatz im Gegenstrom rückspült. Die Rückspüleinrichtung kann fest installiert oder einführbar sein. Eine bevorzugte Ausführungsform ist ein Schlauch mit Düsenmuffen, der um den im Innern des Koaleszenzeinsatzes zur Führung des Schwimmerverschlusses vorhandenen Käfig gewickelt ist. Es kann zweckmäßig sein, den Spülschlamm mittels einer über den Koaleszenzeinsatz gestülpten Glocke in das Entsorgungsfahrzeug abzusaugen.

## Beschreibung

Die Erfindung bezieht sich auf sog. Koaleszenzabscheider, das sind nach dem Beruhigungsprinzip arbeitende Abscheider mit einem durchströmten Koaleszenzeinsatz, der so strukturiert ist, daß es zu einer Koaleszenz der im Abwasser vorhandenen feinst dispergierten Leichtflüssigkeiten kommt. Die koaleszierten Leichtflüssigkeiten steigen zur Oberfläche des Abscheiderinhalts und können von dort abgezogen werden.

Da mit dem Abwasser neben den Leichtflüssigkeiten auch Schwerstoffe herangeführt werden, die überwiegend an die Leichtflüssigkeitströpfchen angelagert sind, können diese Aggregate wegen der nahe bei 1 liegenden spezifischen Dichte nicht abgeschieden werden, sie lagern sich in den Poren des Koaleszenzeinsatzes ab. Um einen Stau auf der Zulaufseite zu vermeiden, müssen die Koaleszenzeinsätze daher von Zeit zu Zeit gesäubert werden. Hierfür werden die Einsätze herausgenommen und in einer dafür geeigneten Station mit scharfen Spülstrahlen gereinigt. Der Spülschlamm muß aufgefangen und anschließend entsorgt werden. Diese Art der Reinigung der Koaleszenzeinsätze ist mit einem hohen Zeit- und Arbeitsmittelaufwand verbunden und darüber hinaus von der Zuverlässigkeit des Personals abhängig. Es dürfte vorkommen, daß die Reinigung flüchtig und unvollständig gemacht wird. Auch wird zunehmend der Wunsch geäußert, die Koaleszenzeinsätze in bestimmten kürzeren Zeitabständen ohne Ausbau zwischenzureinigen.

Bei Koaleszenzabscheidern, die mit einem quer in den Abscheidequerschnitt eingesetzten flächigen Einsatz ausgestattet sind, ist bereits vorgeschlagen worden, diese Zwischenreinigung durch ein Düsenrohr durchzuführen, das auf der Abströmseite des Einsatzes liegt und in Vertikalführungen auf- und abbewegt werden kann (DE-C- 34 03 718). Es ist bekannt (DE-A 40 01 921), in den Koaleszenzeinsatz einen perforierten Schlauch in Windungen verlegt einzubetten und ihn an eine Spülmittelfördereinrichtung anzuschließen.

Eine sehr wirkungsvolle Bauart eines Koaleszenzabscheiders ist diejenige, bei der der Koaleszenzeinsatz die Form eines Hohlzylinders hat und vertikalachsig über den unteren Klarwasserauslauf gestellt ist. Dieser Koaleszenzeinsatz wird von außen nach innen durchströmt (DE-A 37 04 911). Die Koaleszenzeinsätze werden zur Reinigung herausgezogen und z.B. in einem eigens dafür konstruierten Gefährt zu der Reinigungsstation gefahren (DE-U-89 04 912). Auch für horizontal verlaufende und von oben nach unten durchströmte Koaleszenzeinsätze gibt es Reinigungsvorrichtungen in Form von fest eingebauten Spüldüsenrohren (DE-A 33 29 869).

Die Aufgabe, die Zwischenreinigung bei den hohlzylindrischen Koaleszenzeinsätzen zu ermöglichen und die Reinigung überhaupt von menschlichen Unzulänglichkeiten unabhängig zu machen, wird erfindungsgemäß dadurch gelöst, daß im Innern des Koaleszenzeinsatzes eine im wesentlichen die ganze Innenfläche überstreichende Rückspüleinrichtung mit nach außen gerichteten Düsen oder dgl. vorgesehen ist. Dieser Einrichtung wird - bei leerem oder vollem Abscheider - Rückspülmittel unter Druck zugeführt. Der außen anfallende Spülschlamm wird entsorgt. Um bei vollem Abscheider eine Begrenzung des Spülschlamms auf einen kleinen Umgebungsbereich des Koaleszenzeinsatzes zu ermöglichen, wird vorgeschlagen, ein mit einem Absauganschluß versehenes Glockengehäuse zu verwenden, das den Koaleszenzeinsatz übergreifende hohlzylindrische Form hat und während des Rückspülens über den Einsatz gestülpt wird. Der Spülschlamm wird dann unmittelbar nach dem Austritt aus dem Einsatz abgesaugt.

Es gibt verschiedene Möglichkeiten der Ausführung der Rückspüleinrichtung. Wenn der hohlzylindrische Koaleszenzeinsatz einen aus mehreren vertikal verlaufenden Stäben bestehenden Innenkäfig aufweist, dann ist es vorteilhaft, mindestens einen der Stäbe rohrförmig auszubilden und mit über seine Länge verteilten Reihen von nach außen gerichteten Düsenlöchern oder -schlitzen zu versehen. Unten sind die Düsenrohre an ein Verteiler-Ringrohr angeschlossen.

Wenn nur eine oder zwei Düsenreihen eingesetzt werden, dann ist es notwendig, die Innenfläche des Koaleszenzeinsatzes an den Düsenreihen vorbeizubewegen. Hierfür ist es vorteilhaft, wenn der Koaleszenzeinsatz mit einer Hub- und anschließenden Dreheinrichtung ausgerüstet ist.

Fehlt ein Stabkäfig in dem Koaleszenzeinsatz oder ist er z.B. als Loch- oder Streckmetallgitter ausgebildet, dann kommt eine herausnehmbar Rückspüleinrichtung in Fragen, die insbesondere wieder aus einer Reihe von vertikalen Düsenrohren oder mehreren horizontalen Ringrohren oder einer Düsenscheibe bestehen kann. Einrichtungen, die nur ein Ringrohr oder eine Düsenscheibe aufweisen, werden bei der Rückspülung auf- und abbewegt und dabei ggf. gedreht. Auch eine Kombination von vertikalen Düsenrohren und Ringrohren ist denkbar. Schließlich kann auch ein mit einem Spülmittelanschluß versehener Schlauch eingesetzt werden, der in Abständen Muffen oder dgl. mit Düsen aufweist. Diese schlauchförmige Rückspüleinrichtung kann z.B. spiralartig um den Käfig gewickelt werden. Mehrere kurze Schlauchabschnitte können an den Stäben des Käfigs befestigt und oben durch ein Ringrohr verbunden werden.

Eine letzte Ausführungsform der Erfindung besteht aus zwei konzentrisch und koaxial angeordneten Rohren, die dicht miteinander verbunden und mit einem Spülmittelanschluß an den Hohlraum ausgerüstet sind. Die Spüldüsen oder -schlitze befinden sich im äußeren Rohr. Diese Rückspüleinrichtung ist nur zum vorübergehenden Einsetzen in den Koaleszenzeinsatz geeignet.

In den Zeichnungen sind mehrere der oben beschriebenen Ausführungsbeispiele der Erfindung dargestellt, und zwar in:
- Fig. 1: eine erste Ausführung, eingebaut in einen im Vertikalschnitt gezeigten Koaleszenzabscheider.
- Fig. 2: den Rückspüleinsatz zu Fig. 1 in perspektivischer Darstellung,
- Fig. 3: einen Horizontalschnitt nach III-III von Fig. 1,
- Fig. 4: eine zweite Ausführungsform im vertikalen Achsschnitt des Rundabscheidebehälters,
- Fig. 5: einen Horizontalschnitt nach V-V von Fig. 4,
- Fig. 6: eine einzelne Windung des Spülschlauchs und eine Muffe mit 3 Spüldüsen,
- Fig. 7: einen mit stabförmigen Spülrohren ausgerüsteten Spüleinsatz,
- Fig. 8: ein Ringrohr als beweglicher Spüleinsatz,
- Fig. 9: eine Düsenscheibe mit Spülmittelanschlußrohr,
- Fig. 10: eine fest in den Koaleszenzeinsatz eingebaute Rückspüleinrichtung, die aus einem oberen Verteilerringrohr, vertikalen Düsenrohren und mehreren Ring- oder Halbrohren besteht.
- Fig. 11: eine über den Koaleszenzeinsatz gestülpte Zylinderglocke mit Absauganschluß,
- Fig. 12: ein doppelwandiger Spüleinsatz mit Verschluß für den Klarvasserauslauf.
- Fig. 13: eine Ausführungsform mit heb- und drehbarem Koaleszenzeinsatz,
- Fig. 14: die Draufsicht zu Fig. 13.

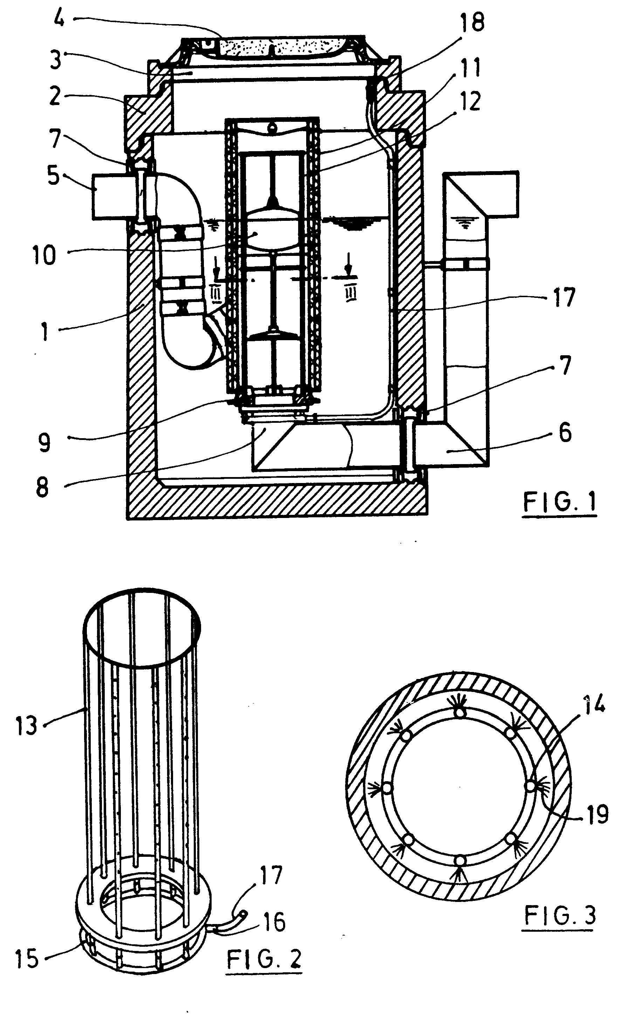

Aus Fig. 1 ist zu erkennen, daß es sich bei dem Abscheider um ein monolithisch, d.h. in einem Stück aus Stahlbeton hergestelltes Becken 1 handelt, das oben durch eine Decke 2 abgedeckt ist, welche ihrerseits eine Wartungsöffnung 3 und eine Schachtabdeckung 4 aufweist. Zu- und Ablaufstutzen 5, 6 sind flexibel durch Mauerflansche 7 geführt. Die Klarwasser-Auslaufarmatur 8 enthält an der Einlauföffnung einen Ventilsitz 9 für den nach DIN 1999 vorgeschriebenen Schwimmerverschluß 10, der auf die Dichtedifferenz zwischen Wasser und Leichtflüssigkeit tariert ist. Dem Ventilsitz 9 ist der hohlzylindrische Koaleszenzeinsatz 11 vorgeordnet, der auf den den Schwimmer 10 führenden Käfig 12 aufgesteckt ist.

Der Käfig 12 enthält gemäß Fig. 2 statt der Vertikalstäbe Rohre 13, die auf ihrer Länge mit radial nach außen gerichteten Düsen 14 ausgerüstet sind. Unten sind die Rohre 13 mit einem Verteiler-Ringrohr 15 verbunden, das einen Anschlußstutzen 16 für den Spülmittelschlauch 17 enthält. Der Spülmittelschlauch ist an der Wand des Abscheidebeckens verlegt. Die Schlauchkupplung 18 liegt leicht erreichbar im Wartungsschacht.

Fig. 3 zeigt den Rückspülvorgang durch Pfeile 19. Bei leerem oder vollem Abscheidebecken wird Spülmittel - Trinkwasser, Brauchwasser oder Luft - unter Druck zugeführt. Die Spülstrahlen lösen die Ablagerungen im Koaleszenzeinsatz und schwemmen sie nach außen. Nach dem Rückspülen sollte dem Spülschlamm Gelegenheit zum Trennen von Leicht- und Schwerstoffen gegeben werden. Wenn der Rückspülvorgang bei entleertem Abscheider vorgenommen wurde, kann der Spülschlamm anschließend ebenfalls abgesaugt und vorschriftsmäßig entsorgt werden.

Der Rückspüleinsatz 12 kann zu Wartungs- und Reperaturzwecken ebenfalls ausgebaut werden, nach dem der Koaleszenzeinsatz ausgebaut worden ist. Beide Bauteile können sogar miteinander verbunden und dann gemeinsam ausgebaut werden.

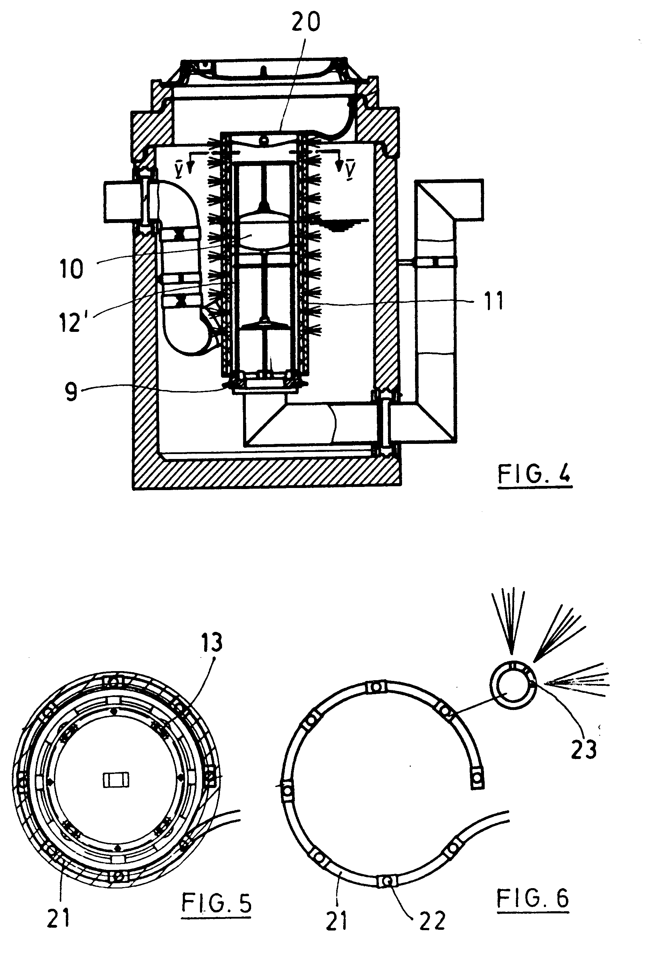

Der Koaleszenzabscheider nach Fig. 4 ist identisch mit dem nach Fig. 1, weshalb auf seine Einzelheiten hier nicht mehr eingegangen wird. Der Käfig 12', der dem Schwimmerverschluß 10 als Führung und dem Koaleszenzeinsatz 11 als Halterung dient, besteht jedoch in herkömmlicher Weise aus massiven Rundstäben 13', die oben durch einen Ring 20 und unten durch den Ventilsitzring 9 zusammengehalten werden.
Auf den Käfig 12' ist in dem Zwischenraum zum etwas größeren Koaleszenzeinsatz 11 ein Schlauch 21 spiralig aufgewickelt. Der Schlauch besitzt nach Fig. 6 eine Vielzahl von Muffen 22, die die Spüldüsen 23 enthalten. Jede Muffe besitzt vorzugsweise drei Düsen, die das Rückspülmittel fächerförmig spreizen und damit einen größeren Flächenabschnitt erfassen. Käfig, Schlauch und Koaleszenzeinsatz werden vorteilhafterweise außerhalb des Abscheiders montiert und dann als Einheit eingebaut. Zur intensiven Reinigung außerhalb des Abscheiders ist es jedoch sinnvoll, nur den Koaleszenzeinsatz entnehmen zu können.

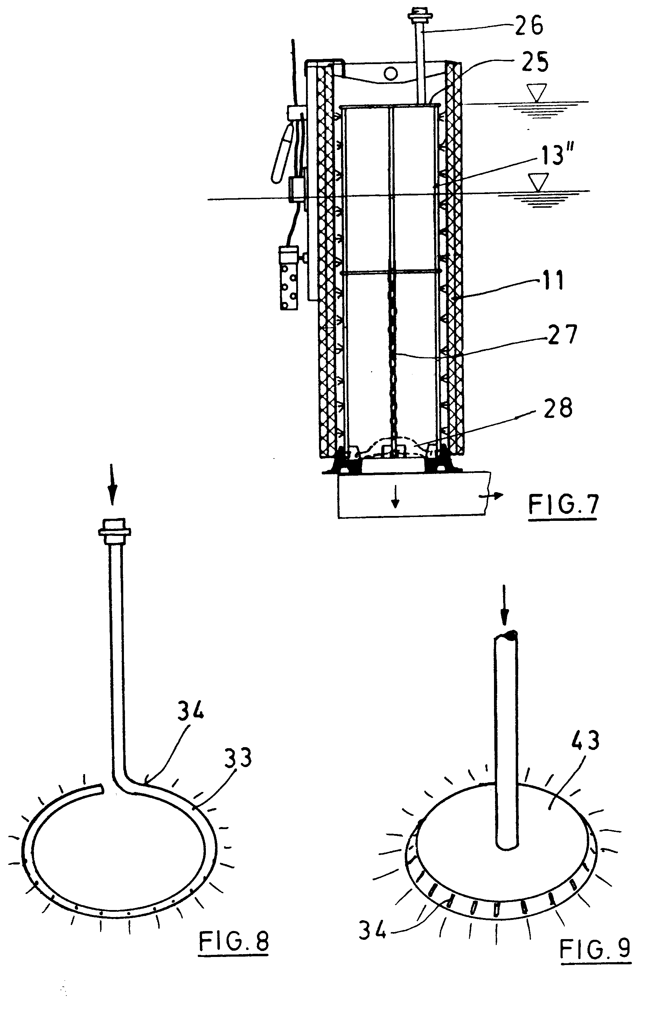

Die Figuren 7 bis 9 zeigen Rückspüleinrichtungen, die nur zum Rückspülen in den Koaleszenzeinsatz eingeführt werden. Diese Technik hat den Vorteil, daß mit einer solchen Einrichtung mehrere Koaleszenzabscheider bedient werden können. Allerdings ist der Rückspüleffekt davon abhängig, wie gründlich die Bedienungsperson die Rückspüleinrichtung über die Innenfläche des Koaleszenzeinsatzes bewegt. Die Rückspüleinrichtung nach Fig. 7 besteht aus vier vertikal stehenden Spülrohren 13'', die oben durch ein Verteilerkreuz 25 verbunden sind. In der Mitte des Verteilerkreuzes 25 ist der Spülmittelstutzen 26 angeschlossen. Dieser Stutzen dient gleichzeitig als Handhabe. An einer Kette 27 hängt eine Kalotte 28, die den Klarwasserauslauf während der Rückspülung verschließt, damit kein Spülschlamm in die Auslaufleitung gelangt. Die Spüleinrichtung nach Fig. 8 enthält ein einziges Ringrohr 33 und nach Fig. 9 eine Hohlscheibe 43 mit einem Kranz von Spüldüsen 34 (hier insbesondere in Schlitzform).

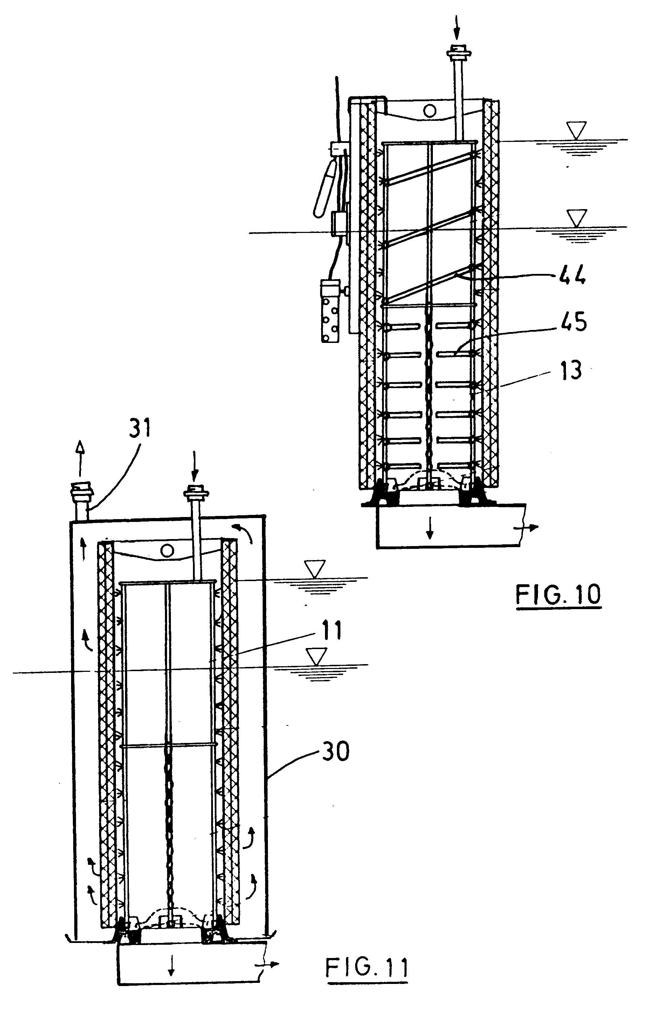

Bei der Rückspüleinrichtung nach Fig. 10 kann es sich um eine ständig eingebaute oder nur zum Rückspülen eingeführte Bauart handeln. Zusätzlich zu den in Fig. 2 gezeigten vertikalen Spülrohren 13 hat diese Spüleinrichtung mehrere Halbringrohre 45, die sich gegenüberliegen. Sie können auch in der Höhe gegeneinander versetzt sein, so daß beim Drehen der Rückspüleinrichtung eine größere Fläche des Koaleszenzeinsatzes überstrichen wird. Die Düsenrohre können auch als geschlossene Ringe 44 ausgebildet und dann schräg angeordnet sein.

In dem Koaleszenzabscheider nach Fig. 11 ist während des Rückspülens eine hohlzylindrische Glocke 30 über den Koaleszenzeinsatz 11 gestülpt. Die Glocke enthält einen Absauganschluß 31, an den während des Rückspülens eine Saugpumpe angeschlossen ist. Dies kann z.B. die Pumpe des Entsorgungsfahrzeugs sein, die dann den Spülschlamm sofort abzieht. Durch das Absaugen wird der Rückspülvorgang aktiv unterstützt.

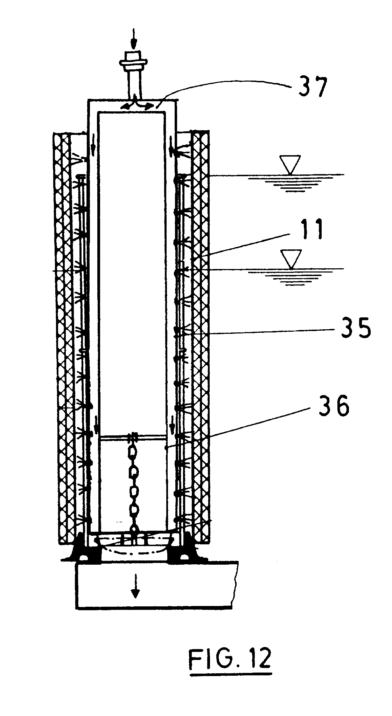

Die Ausführungsform der Erfindung nach Fig. 12 enthält als Rückspüleinrichtung ein Doppelrohr 35, 36, dessen Hohlraum über ein Verteilrohr 37 mit Spülmittel versorgt wird. Das äußere Rohr 35 enthält über die Länge und den Umfang verteilt eine Vielzahl von Düsenlöchern oder -schlitzen. Diese Spüleinrichtung kann während des Abscheiderbetriebs nicht im Abscheider bleiben, weil es den Durchfluß des Abwassers durch den Koaleszenzeinsatz unmöglich machen würde.

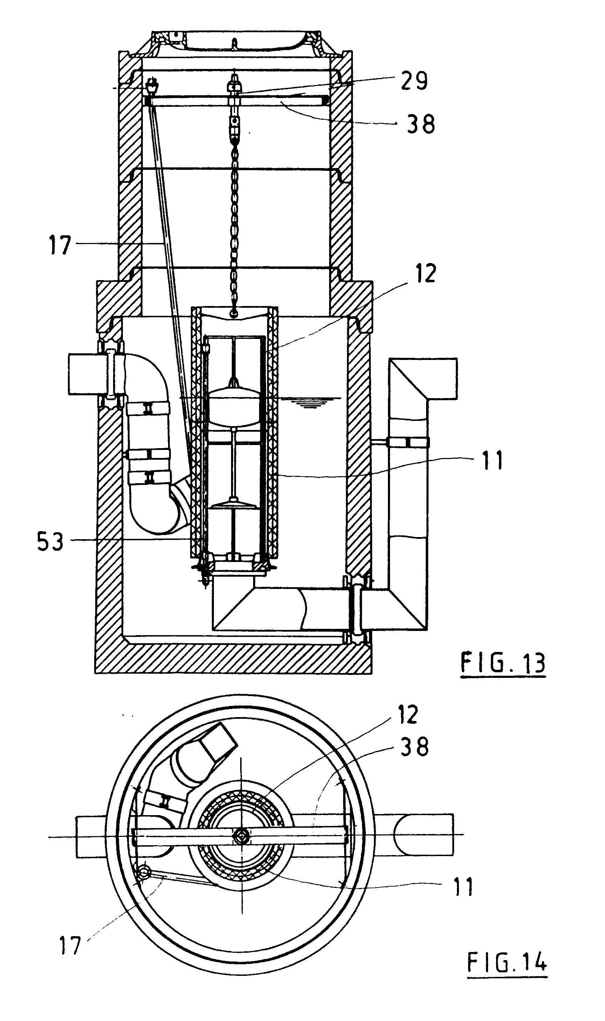

Das Ausführungsbeispiel nach den Figuren 13 und 14 unterscheidet sich von den vorbeschriebenen dadurch, daß nur eine feststehende Düsenreihe 53 vorgesehen ist, die Bestandteil des Innenkäfigs 12 ist und einen Schlauchanschluß 17 enthält. Zum Rückspülen wird die an einer Traverse 38 gelagerte Spindel 29 betätigt, die den Koaleszenzeinsatz 11 zunächst anhebt und dann dreht. Nach dem Rückspülen wird der Koaleszenzeinsatz wieder auf seinen Sitz abgesenkt.

## Patentansprüche

1. Koaleszenzabscheider für mit Leichtflüssigkeiten verunreinigte Abwässer, mit einem dem unteren Klarwasserauslauf vorgeordneten, vertikalachsig angeordneten hohlzylindrischen Koaleszenzeinsatz, der von außen nach innen durchströmt wird, **dadurch gekennzeichnet**, daß im Innern des Koaleszenzeinsatzes (11) eine im wesentlichen die ganze Innenfläche überstreichende Rückspüleinrichtung (13 ... 22) mit nach außen gerichteten Düsen (14, 23) oder dgl. vorgesehen ist.

2. Koaleszenzabscheider nach Anspruch 1, bei dem ein Innenkäfig mit mehreren vertikal verlaufenden Stäben vorgesehen ist, **dadurch gekennzeichnet**, daß mindestens einer der Stäbe (13) rohrförmig ausgebildet ist über seine Länge gleichmäßig verteilt eine Reihe von nach außen gerichteten Düsenlöchern (14) und einen Anschluß (17) für die Spülmittelzufuhr aufweist.

3. Koaleszenzabscheider nach Anspruch 1 oder 2, **dadurch gekennzeichnet**, daß die Rückspüleinrichtung (53) feststehend und der Koaleszenzeinsatz (11) an der Rückspüleinrichtung (53) vorbeidrehbar ausgebildet ist.

4. Koaleszenzabscheider nach Anspruch 3, **dadurch gekennzeichnet**, daß der Koaleszenzeinsatz (11) mit einer Hub- und anschließenden Dreheinrichtung (29) ausgerüstet ist.

5. Koaleszenzabscheider nach Anspruch 1, **dadurch gekennzeichnet**, daß mehrere vertikal verlaufende, auf dem Umfang eines Kreises verteilt angeordnete Düsenrohre (13) zu einer Rückspüleinrichtung zusammengesetzt sind, die einen Spülflüssigkeitsanschluß (16) aufweist und in den hohlzylindrischen Koaleszenzeinsatz (11) einführbar ist.

6. Koaleszenzabscheider nach Anspruch 1, **dadurch gekennzeichnet**, daß die Rückspüleinrichtung aus einem Schlauch (21) besteht, der mit Muffen (22) mit nach außen gerichteten Düsen (23) ausgerüstet ist.

7. Koaleszenzabscheider nach Anspruch 6, **dadurch gekennzeichnet**, daß der Schlauch (21) spiralig um einen den Koaleszenzeinsatz (11) tragenden Käfig (13') gewickelt ist.

8. Koaleszenzabscheider nach Anspruch 6, **dadurch gekennzeichnet**, daß auf jedem Stab des Käfigs ein Schlauchstück befestigt ist, wobei alle Schlauchstücke oben an ein ringförmiges Verteilerrohr angeschlossen sind.

9. Koaleszenzabscheider nach Anspruch 2, **dadurch gekennzeichnet**, daß die rohrförmigen Stäbe (13) des Käfigs (12) unten an ein ringförmiges Verteilerrohr (15) angeschlossen sind.

10. Koaleszenzabscheider nach einem oder mehreren der vorstehenden Ansprüche, **gekennzeichnet** durch eine Verschlußeinrichtung (28) für den Klarwasserauslauf (6) während der Rückspülung.

11. Koaleszenzabscheider nach Anspruch 10, **dadurch gekennzeichnet**, daß die Verschlußeinrichtung als an das einführbare Rückspül-Bauteil (13', 25) angehängte schwere Kugel (28) oder Platte ausgebildet ist, die bei voll eingeführtem Bauteil auf der Klarwasserauslauföffnung ruht.

12. Koaleszenzabscheider nach Anspruch 1, **dadurch gekennzeichnet**, daß die Rückspüleinrichtung aus zwei koaxial ineinander angeordneten Rohrstücken (35, 36) besteht, die dicht miteinander verbunden und mit einem Spülmittelanschluß versehen sind, und daß das äußere Rohrstück (35) eine Vielzahl von auf die Länge und den Umfang verteilte Düsenlöcher und/oder -schlitze aufweist.

13. Koaleszenzabscheider nach Anspruch 1, **gekennzeichnet** durch ein Ringrohr (33) oder eine hohle Kreisscheibe (43) mit einem Kranz radial nach außen gerichteter Rückspüldüsen (34) und einem daran angeschlossenen Spülflüssigkeitszufuhrrohr` an dem, die Rückspüleinrichtung (33, 43) in das Innere des Koaleszenzeinsatzes (11) eingeführt und dort vertikal bzw. drehend bewegt werden kann.

14. Koaleszenzabscheider nach einem oder mehreren der vorstehenden Ansprüche **gekennzeichnet** durch ein mit einem Absauganschluß (31) versehenes Glockengehäuse (30), das den Koaleszenzeinsatz (11) übergreifende hohlzylindrische Form hat und mit einer an der Unterkante liegenden Dichtung ausgestattet ist.
